# DEMANDE DE BREVET EUROPEEN

(11) **EP 1 203 680 A1**
(43) Date de publication de la demande: **08.05.2002**
(21) Numéro de dépôt: 01402725.4
(22) Date de dépôt: 19.10.2001
(51) Int. Cl.: B60J 7/14

(54) **Toit escamotable pour véhicule, comprenant trois éléments pivotants coulissants**

(30) Priorité: 06.11.2000 FR 0014181
(71) Demandeur: France Design, 79140 Le Pin (FR)
(72) Inventeur: Queveau, Gérard, 79140 Le Pin (FR); Guillez, Jean-Marc, 79140 Cirieres (FR)
(74) Mandataire: Geismar, Thierry

(57) **Abrégé**

Le toit escamotable pour véhicule, comprend un élément de toit avant (1), un élément de toit intermédiaire (2) et un élément de toit arrière (3). Le déplacement de l'élément arrière (3) vers le coffre est commandé par au moins un bras articulé au châssis et à l'élément arrière, en ce que l'élément arrière (3) comporte une glissière (9) s'étendant entre ses bords avant et arrière dans laquelle peut s'engager un doigt (10) solidaire du bord arrière de l'élément intermédiaire (2) pour que l'élément intermédiaire (2) puisse coulisser sur l'élément arrière (3) en ce que l'élément intermédiaire (2) comporte lui aussi une glissière (11) s'étendant entre ses bords avant et arrière sans laquelle peut s'engager un doigt (12) solidaire du bord arrière de l'élément avant (1) pour que l'élément avant (1) puisse coulisser sur l'élément intermédiaire (2), en ce que le bord avant de l'élément arrière (3) est relié de façon articulée à l'élément intermédiaire (2) par un levier (13) qui est lui-même relié de façon articulée au bras (6) par une biellette (14) et en ce que le bord avant de l'élément intermédiaire (2) est relié de façon articulée à l'élément avant (1) par un levier (15) qui est lui-même relie de façon articulée par une biellette (16) au levier (13) qui relie l'élément intermédiaire (2) à l'élément avant (1).

## Description

La présente invention concerne un toit escamotable ou rétractable dans le coffre arrière d'un véhicule.

Un tel toit escamotable permet notamment de transformer un véhicule du type coupé à deux places ou coupé ou berline à quatre places en un véhicule du type cabriolet.

Dans le cas des coupés ou berlines à quatre places, le toit présente une longueur relativement importante, de sorte que le toit escamotable est composé de trois éléments dont chacun présente une longueur compatible avec les dimensions du coffre du véhicule.

On connaît ainsi un toit escamotable pour véhicule, comprenant un élément de toit avant, un élément de toit intermédiaire et un élément de toit arrière, ces trois éléments étant mobiles entre une position dans laquelle, ils recouvrent l'habitacle du véhicule et une position dans laquelle, ils sont superposés sensiblement horizontalement dans le coffre arrière du véhicule.

Le but de la présente invention est d'apporter des perfectionnements aux moyens connus, pour commander et guider d'une manière optimale le déplacement des éléments du toit entre leur position de fermeture et leur position de rangement dans le coffre.

Suivant l'invention, le toit escamotable est caractérisé en ce que le déplacement de l'élément arrière vers le coffre est commandé par au moins un bras articulé au châssis du véhicule et à l'élément arrière, en ce que l'élément arrière comporte une glissière s'étendant entre ses bords avant et arrière dans laquelle peut s'engager un doigt solidaire du bord arrière de l'élément intermédiaire pour que l'élément intermédiaire puisse coulisser sur l'élément arrière, en ce que l'élément intermédiaire comporte lui aussi une glissière s'étendant entre ses bords avant et arrière dans laquelle peut s'engager un doigt solidaire du bord arrière de l'élément avant pour que l'élément avant puisse coulisser sur l'élément intermédiaire, en ce que le bord avant de l'élément arrière est relié de façon articulée à l'élément intermédiaire par un levier qui est lui-même relié de façon articulée au bras par une biellette et en ce que le bord avant de l'élément intermédiaire est relié de façon articulée à l'élément avant par un levier qui est lui-même relié de façon articulée par une biellette au levier qui relie l'élément intermédiaire à l'élément avant.

D'autres particularités et avantages de l'invention apparaîtront encore dans la description ci-après.

Aux dessins annexés, donnés à titre d'exemples non limitatifs :
- La figure 1 est une vue schématique en coupe longitudinale partielle d'un véhicule équipé d'un toit escamotable selon l'invention, en position fermée ;
- Les figures 2 et 3 sont des vues analogues à la figure 1, montrant deux versions du toit escamotable, ce dernier étant dans une position intermédiaire ;
- La figure 3 est une vue analogue à la figure 2 concernant une variante ;
- La figure 4 est une vue analogue aux figures 1 à 3, le toit escamotable étant en position rangée dans le coffre du véhicule.

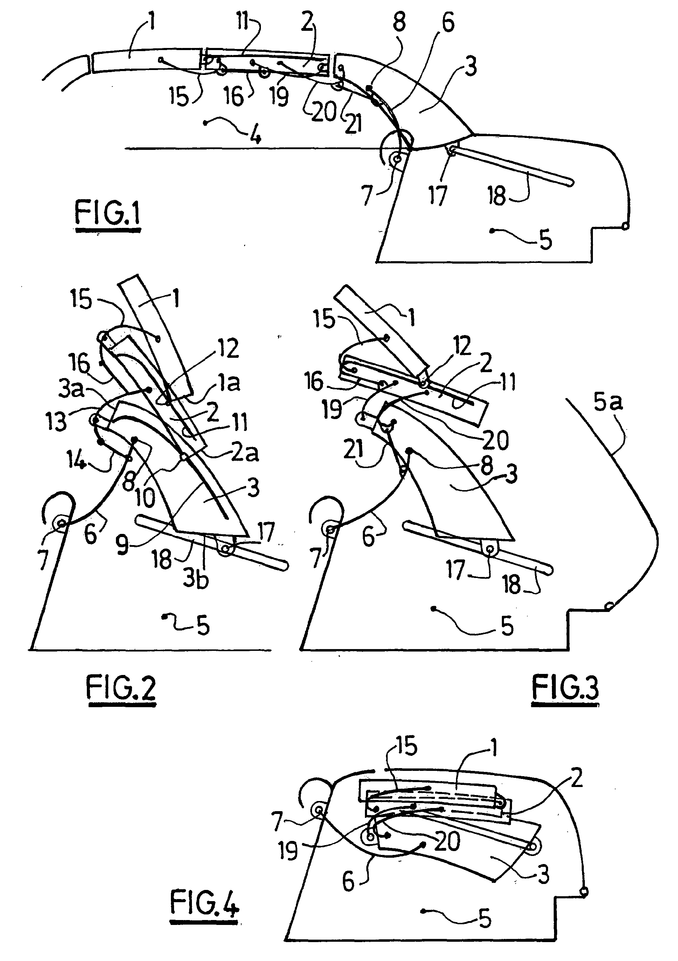

Dans la réalisation représentée sur les figures 1 à 4, le toit escamotable comprend un élément du toit avant 1, un élément de toit intermédiaire 2 et un élément de toit arrière 3. Ces trois éléments 1, 2,3 sont mobiles entre une position dans laquelle (voir figure 1) ils recouvrent l'habitacle 4 du véhicule et une position dans laquelle (voir figure 4), ils sont superposés sensiblement horizontalement dans le coffre arrière 5 du véhicule.

Conformément à l'invention, le déplacement de l'élément arrière 3 vers le coffre 5 est commandé par un bras 6 articulé en 7 au châssis du véhicule et en 8 à l'élément arrière 3.

On voit sur la figure 2, que l'élément arrière 3 comporte une glissière 9 s'entendant entre ses bords avant 3a et arrière 3b dans laquelle peut s'engager un doigt 10 solidaire du bord arrière 2a de l'élément intermédiaire 2 pour que cet élément intermédiaire 2 puisse coulisser sur l'élément arrière 3.

L'élément intermédiaire 2 comporte lui aussi une glissière 11 s'étendant entre ses bords avant et arrière 2a dans laquelle peut s'engager un doigt 12 solidaire du bord arrière 1a de l'élément avant 1 pour que cet élément avant 1 puisse coulisser sur l'élément intermédiaire 2.

D'autre part, le bord avant 3a de l'élément arrière est relié de façon articulée à l'élément intermédiaire par un levier 13 qui est lui-même relié de façon articulée au bras 6 par une biellette 14.

Par ailleurs, le bord avant de l'élément intermédiaire 2 est relié de façon articulée à l'élément avant 1 par un levier 15 qui est lui-même relié de façon articulée par une biellette 16 au levier 13 qui relie l'élément intermédiaire 2 à l'élément arrière 3.

Dans les exemples représentés sur les figures 1 à 4, le déplacement de l'élément arrière 3 vers le coffre 5 est en outre commandé par un doigt 17 porté par la partie arrière 3b de l'élément arrière 3 engagé de façon coulissante dans une glissière 18 s'étendant à l'intérieur du coffre 5.

Au lieu de ce doigt 17 et de cette glissière 18, le déplacement de l'élément arrière 3 vers le coffre 5 peut être commandé par un second bras articulé au châssis et à la partie arrière 3b de l'élément arrière 3.

Dans la variante représentée sur la figure 3, l'élément avant 1 est relié à l'élément intermédiaire 2 de la même façon que dans le cas de la version selon la figure 2.

De même, comme dans le cas de la figure 2, l'élément arrière 3 est déplacé par un bras articulé 6 et sa partie arrière coulisse dans une glissière 18.

En revanche, l'élément arrière 3 ne comporte pas de glissière. Il est relié à l'élément arrière par deux leviers articulés 19, 20dont l'un 20 est relié de façon articulée par une biellette 21 au bras 6.

La version du toit escamotable représentée sur la figure 2 fonctionne de la manière suivante:

Après déverrouillage des éléments 1, 2, 3 et ouverture du couvercle 5a du coffre 5, le bras 6 dont le pivotement est commandé par un moteur ou un vérin, déplace l'élément arrière 3 vers le coffre 5. Ce déplacement est guidé par le doigt 17 qui coulisse dans la glissière 18.

Le bras 6 dans son mouvement fait pivoter vers l'arrière, grâce à la biellette 14, le levier 13 relié à l'élément 2. De même, le levier 13 entraîne dans son mouvement grâce à la biellette 16, le levier 15 relié à l'élément 1.Le basculement des leviers 13 et 15 pousse les éléments 2 et 1 respectivement dans les glissières 11 et 9, de sorte que les éléments 1, 2, 3 se superposent progressivement puis viennent se ranger sensiblement horizontalement dans le coffre 5 comme indiqué sur la figure 4.

Dans le cas de la figure 3, les éléments arrière 3 et avant 1 se déplacent de la même façon que dans le cas de la figure 2.

L'élément intermédiaire 2 est déplacé vers le haut et se superpose progressivement à l'élément arrière 3 grâce aux leviers 19, 20 dont le pivotement vers le haut est commandé par la biellette 21 qui est entraînée par le bras 6.

Dans une version simplifiée de l'invention, notamment dans le cas des coupés ne comportant que deux places, le toit escamotable pourrait ne comporter que les deux éléments 2 et 3.

## Revendications

1. Toit escamotable pour véhicule, comprenant un élément de toit avant (1), un élément de toit intermédiaire (2) et un élément de toit arrière (3), ces trois éléments étant mobiles entre une position dans laquelle, ils recouvrent l'habitacle (4) du véhicule et une position dans laquelle, ils sont superposés sensiblement horizontalement dans le coffre arrière (5) du véhicule, **caractérisé en ce que** le déplacement de l'élément arrière (3) vers le coffre est commandé par au moins un bras articulé au châssis et à l'élément arrière, **en ce que** l'élément arrière (3) comporte une glissière (9) s'étendant entre ses bords avant et arrière dans laquelle peut s'engager un doigt (10) solidaire du bord arrière de l'élément intermédiaire (2) pour que l'élément intermédiaire (2) puisse coulisser sur l'élément arrière (3) **en ce que** l'élément intermédiaire (2) comporte lui aussi une glissière (11) s'étendant entre ses bords avant et arrière dans laquelle peut s'engager un doigt (12) solidaire du bord arrière de l'élément avant (1) pour que l'élément avant (1) puisse coulisser sur l'élément intermédiaire (2), **en ce que** le bord avant de l'élément arrière (3) est relié de façon articulée à l'élément intermédiaire (2) par un levier (13) qui est lui-même relié de façon articulée au bras (6) par une biellette (14) et **en ce que** le bord avant de l'élément intermédiaire (2) est relié de façon articulée à l'élément avant (1) par un levier (15) qui est lui-même relie de façon articulée par une biellette (16) au levier (13) qui relie l'élément intermédiaire (2) à l'élément avant (1).

2. Toit escamotable conforme à la revendication 1, **caractérisé en ce que** le déplacement de l'élément arrière (3) vers le coffre (5) est en outre commandé par un doigt (17) porté par la partie arrière de l'élément arrière (3) engagé de façon coulissante dans une glissière (18) s'étendant à l'intérieur du coffre (5).

3. Toit escamotable conforme à la revendication 1, **caractérisé en ce que** le déplacement de l'élément arrière (3) vers le coffre (5) est en outre commandé par un second bras articulé au châssis et à la partie de l'élément arrière (3)
